# EUROPÄISCHE PATENTSCHRIFT

(11) **EP 2 371 215 B1**
(45) Veröffentlichungstag und Bekanntmachung des Hinweises auf die Patenterteilung: **27.04.2016**
(21) Anmeldenummer: 11401045.7
(22) Anmeldetag: 21.03.2011
(51) Int. Cl.: A01M 7/00, B05B 15/06

(54) **Ausbringleitung einer landwirtschaftlichen Feldspritze**
Distribution pipe of an agricultural field spraying device
Conduite de distribution d'un pulvérisateur agricole

(30) Priorität: 30.03.2010 DE 102010016204
(43) Veröffentlichungstag der Anmeldung: 05.10.2011
(73) Patentinhaber: Amazonen-Werke H. Dreyer GmbH & Co. KG, 49205 Hasbergen (DE)
(72) Erfinder: Langkamp, Laurenz, 49545, Tecklenburg (DE); Kalverkamp, Felix, 49401, Damme (DE)

(56) Entgegenhaltungen:
- EP-A1- 1 066 757
- GB-A- 351 665
- US-A- 6 053 427

## Beschreibung

Die Erfindung betrifft eine Ausbringleitung einer landwirtschaftlichen Feldspritze gemäß des Oberbegriffes des Patentanspruches 1.

Derartige Ausbringleitungen sind beispielsweise durch die EP 1 066 757 A1 bekannt. Durch den kontinuierlich sich verringernden Querschnitt der Ausbringleitung besteht die Problematik, dass nicht immer gewährleistet ist, dass überall ein ausreichend glatter Übergang ist, so dass sich Flüssigkeit in der Leitung bei der Entleerung ansammelt und somit nicht zurückfließen kann. Der Flüssigkeitsquerschnitt der Ausbringleitung nimmt in Richtung der der Flüssigkeitsleitung abgewandten Seite kontinuierlich und/oder stufenweise ab

Der Erfindung liegt die Aufgabe zugrunde, hier Abhilfe zu schaffen.

Diese Aufgabe wird erfindungsgemäß dadurch gelöst, dass der Querschnitt der Durchgangsleitung der Abzweigstücke zumindest teilweise größer ist als der Querschnitt der Ausbringleitungen zwischen den Abzweigstücken, dass die Mittelpunkte der Flüssigkeitsquerschnitte der Ausbringleitungen und der Kupplungsstücke der Ausbringleitungen mit den Abzweigleitungen versetzt zueinander angeordnet sind und zwar derart, dass die untere Leitungsfläche der Ausbringleitung auf gleicher Höhe wie die untere Leitungsfläche der Abzweigleitung liegen. Infolge dieser Maßnahmen ist die untere Leitungsfläche bei sich verringerndem Querschnitt auch im Bereich der Abzweigleitung immer auf der gleichen unteren Ebene angeordnet, so dass sich eine gerade durchgehende untere Leitungsfläche der Ausbringleitung ergibt.

Um auch bei Ausbringleitungen, die Streckkupplungen aufweisen, wobei das Steckerteil an der Ausbringleitung angeordnet ist und in das Verbindungsstück gesteckt wird, einen erfindungsgemäßen Übergang zu gewährleisten, ist vorgesehen, dass die Wandung des Kupplungsstückes der Ausbringleitung im unteren Bereich einen schlitzartigen Ausschnitt aufweist.

Durch die versetzte Anordnung der Mittellinie von Ausbringleitungen und Abzweigleitungen in den Abzweigstellen lässt sich eine geringe Teilevielfalt gewährleisten, weil die Stecksysteme im Kuppelbereich gleich ausgebildet sein können.

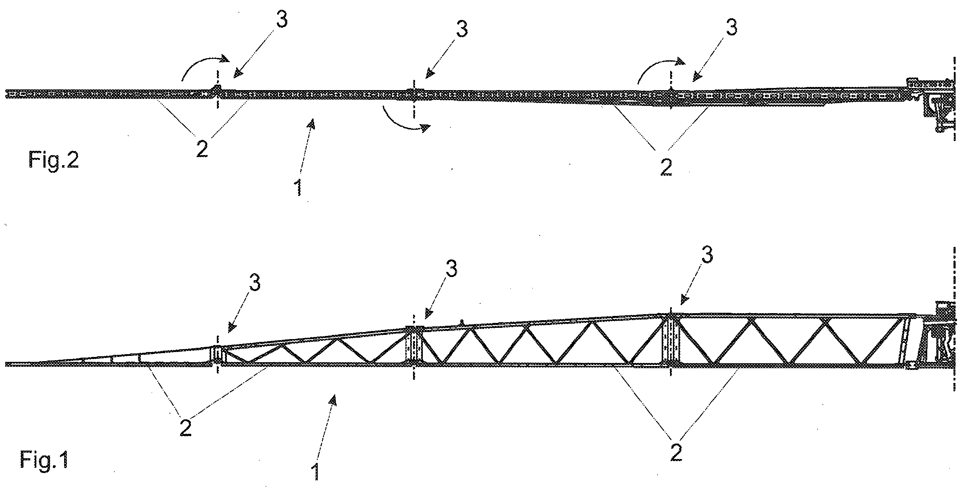

Weitere Einzelheiten der Erfindung sind der Beispielsbeschreibung und den Zeichnungen zu entnehmen. Hierbei zeigen
- Fig. 1: in Fahrtrichtung gesehen linke Hälfte des Verteilergestänges einer landwirtschaftlichen Pflanzenschutzspritze,
- Fig. 2: das Verteilergestänge gemäß Fig. 1 in der Draufsicht,
- Fig. 3: den Verbindungsbereich eines Düsenanschlussstückes mit dem Ende eines Zwischenstückes einer Ausbringleitung im Schnitt III - III,
- Fig. 4: das Verbindungsstück gemäß Fig. 3 in der Draufsicht,
- Fig. 5: die Einzelheit X gemäß Fig. 3 in vergrößertem Maßstab,
- Fig. 6: den Steckerschaft der Ausbringleitung im Schnitt gemäß Fig. 3,
- Fig. 7: ein Teilabschnitt der Feldspritzleitung in Seitenansicht,
- Fig. 8: der Teilabschnitt gemäß Fig. 7 in Draufsicht,
- Fig. 9: der Steckerschaft der Teilabschnittleitung in der Ansicht IX - IX,
- Fig. 10: der Steckerschaft der Teilabschnittleitung in der Ansicht X - X,
- Fig. 11: ein Abzweigstück der Feldspritzleitung mit angeschlossenen Teilabschnitten der Feldspritzleitung im Schnitt,
- Fig. 12: das Abzweigstück mit den angeschlossenen Teilabschnitten der Feldspritzleitung in Ansicht XII - XII,
- Fig. 13: das Abzweigstück mit den daran anzuschließenden Teilabschnittsleitungen gemäß Fig. 11 in Explosionsdarstellung.

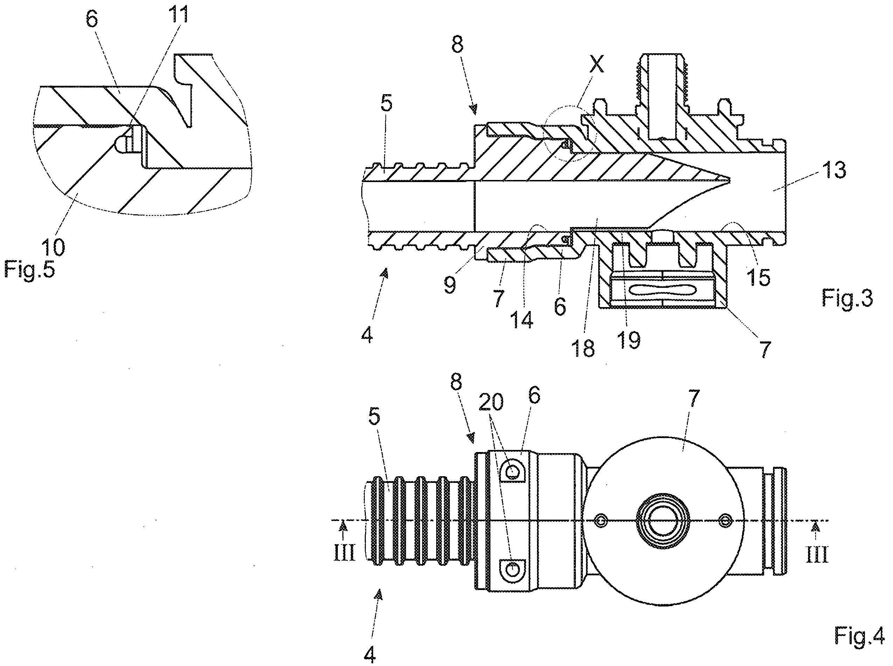

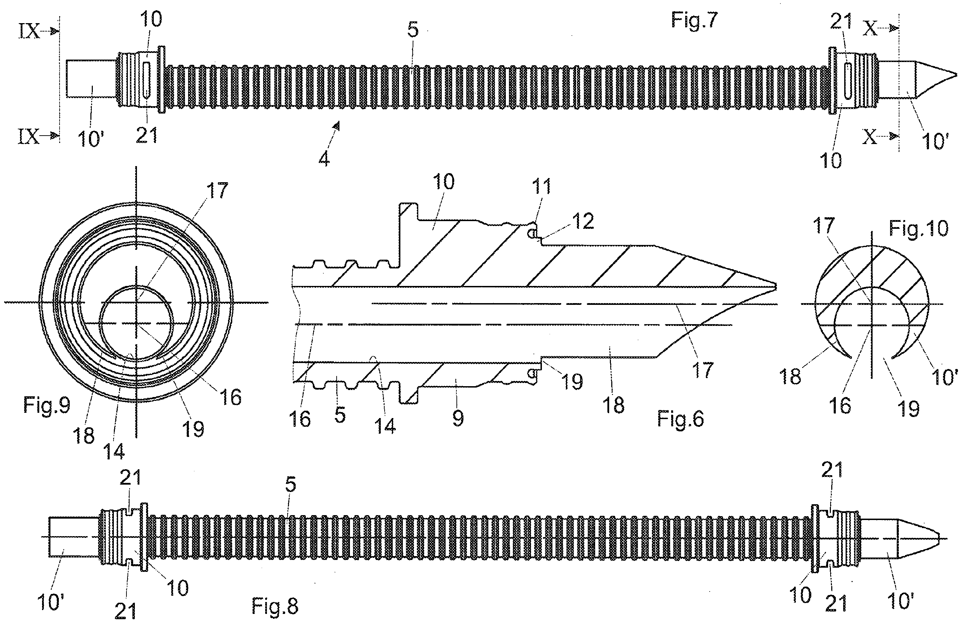

Das Verteilergestänge 1 einer landwirtschaftlichen Feldspritze ist in mehrere Teilsegmente 2 unterteilt, die jeweils durch Gelenkverbindungen 3 miteinander verbunden und zueinander einklappbar sind. Dem Verteilergestänge 1 ist eine landwirtschaftliche Pflanzenschutz- und Feldspritzleitung 4 zugeordnet. Diese Leitung 4 besteht aus mehreren Teilabschnitten 5, die durch Anschlusselemente 6 von Gehäusen von Ausbringelementen 7 miteinander verbunden sind. Diese Verbindungselemente 8, die von den Anschlusselementen 6 der Gehäuse der Ausbringelemente 7 und den Anschlusselementen 9 der Teilabschnitte der Leitungen 4 gebildet werden, weisen zumindest ein Gehäuseteil 6 und einen Steckerteil 9 auf, um Teilabschnitte 5 der Pflanzenschutz- und Feldspritzleitung 4 miteinander zu verbinden. Hierzu ist das Steckerteil 9 mit seinem Steckerschaft 10 dichtend in die Aufnahmeöffnung 6 des Gehäuseteils 7 einsteckbar. Hierbei ist an dem Steckerschaft 10 ein Dichtelement 11 einstückig mit dem Steckerschaft 10 verbunden ausgebildet angeordnet. Dieses Dichtelement 11 ist als Dichtlippe ausgebildet und am Beginn 12 des freien Endes des Steckerschaftes 10 angeordnet, wie Fig. 6 zeigt. Dieses Dichtelement 11 wirkt mit der zylinderförmigen Aufnahmeöffnung 6 des Gehäuseteils 7 abdichtend zusammen, wie die Fig. 3 und 4 zeigen. Der Steckerschaft 10 des Steckerteils 9 ist zusammen mit dem Dichtelement 11 als gemeinsames Kunststoffspritzteil ausgebildet, so dass das Dichtelement 11 in einfacher Weise am Steckerschaft 10 angeordnet ist.

Die Feldspritzleitung 4 ist entsprechend der Teilabschnitte 5 in entsprechende Teilbereiche unterteilt. Jeder Teilbereich der Feldspritzleitung 4 wird von einer nicht dargestellten Flüssigkeitszuführleitung mit der auszubringenden Flüssigkeit mit einstellbaren Flüssigkeitsmengen gespeist.

Der Flüssigkeitsquerschnitt der als Ausbringleitungen ausgebildeten Feldspritzleitungen 4 nimmt in Richtung der der Flüssigkeitszuführleitung abgewandten Seite stufenweise ab. Diese Abnahme des Flüssigkeitsquerschnittes ist an die die Flüssigkeitsleitung bzw. im Teilbereich der Flüssigkeitsleitung 4 passierenden Flüssigkeitsmenge zu den Ausbringelementen 7 angepasst. An den Ausbringelemente 7 sind nicht dargestellte Spritzdüsen anzuordnen, über die Flüssigkeit ausgebracht wird.

Um gleiche Abzweigstücke, d.h. Ausbringelemente 7 mit entsprechenden Aufnahmeöffnungen 6 verwenden zu können, sind zwischen den einzelnen Ausbringelementen bzw. den Abzweigstücken 7 Ausbringleitungen 4 mit unterschiedlichen Flüssigkeitsquerschnitten angeordnet, wobei der jeweilige Steckerschaft 10, der einer Leitung 4 oder Teilabschnitt zugeordnet ist, entsprechend gleich den Aufnahmeöffnungen 6 der gleichen Abzweigstücke 7 ausgestaltet ist. Hierzu ist der Querschnitt der Durchgangsleitung 13 der Abzweigstücke 7 teilweise größer als der Querschnitt der Ausbringleitung 4, 5 zwischen den Abzweigstücken 6 ausgebildet. Um dennoch zu erreichen, dass die untere Leitungsfläche 14, 15 der Ausbringleitungen 4, 5 und der Verbindungsstücke der Abzweigstücke 7 auf gleicher Höhe liegen sind die Mittelpunkte 16, 17 der Flüssigkeitsquerschnitte der Ausbringleitungen 4, 5 und der Kupplungsstücke 7 der Ausbringleitungen 4 mit den Abzweigleitungen 7 versetzt zueinander angeordnet, und zwar derart, dass die untere Leitungsfläche 14 der Ausbringleitung 5 auf gleicher Höhe wie die untere Leitungsfläche 15 der Abzweigleitung 7. Hierdurch wird eine durchgehende Fläche geschaffen, so dass keine unnötigen Restmengen bei Entleerung der Leitungen 4, 5, 13 in den Leitungen 4,5, 13 verbleibt. Um auch eine durchgehende untere Leitungsfläche 15 im Bereich der Abzweigstücke 7, d.h. des Steckerschaftes 10 und 10' und der Aufnahmeöffnung 6 zu erreichen, weist die Wandung 18 des vorderen Kupplungsstückes, d.h. des vorderen Steckerschaftes 10' der Ausbringleitung 5 den schlitzartigen Ausschnitt 19 auf.

Damit die Leitungen 5 nach ihrer Montage in der richtigen Position verbleiben und sich nicht zu den Abzweigstücken 7 7verdrehen könne, weisen die Steckverbindungen zwischen den Leitungsstücken 9 und Kupplungsstücken 6 formschlüssige Sicherungselemente auf. Hierbei bestehen die Kupplungsstücke, wie erwähnt, aus dem Steckerteil 9 und Öffnungen 6. Die Verdrehsicherungselemente sind zwischen den Leitungsstücken 5 und Abzweigstücken 6 entsprechend angeordnet. Hierbei sind in den Gehäuseteil 7 die Durchbrüche 20 und in dem Steckerschaft 10 Aussparungen 21, die die Kupplungsposition miteinander fluchten und in die ein nicht dargestellter Sicherungsstecker einsteckbar ist, angeordnet, wie Fig. 4 zeigt. Die Aussparungen 21 in dem Steckerschaft 10 sind als zwei parallel zueinander geradlinig verlaufende nutartige Vertiefungen 21 ausgebildet. Die nutartigen Vertiefungen 21 sind in den gegenüberliegenden Außenwänden des Steckerschaftes 10 eingebracht. In diese nutartigen Vertiefungen 21 werden dann Sicherungselemente durch die Durchbrüche 20 der Steckhülsen 7 gesteckt. Hierbei liegen diese Sicherungselemente dann auch in den nutartigen Vertiefungen 21 der Außenwände. Hierdurch ist eine Verdrehsicherung zueinander gewährleistet.

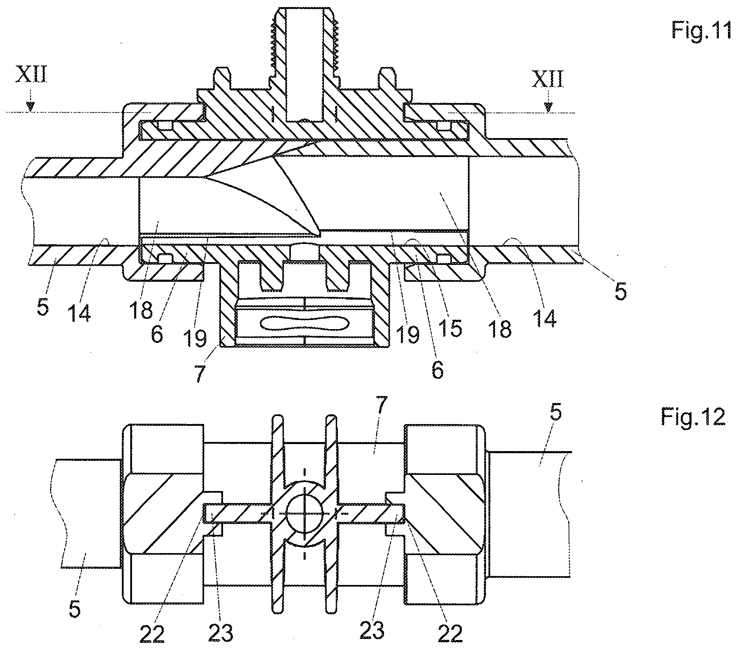

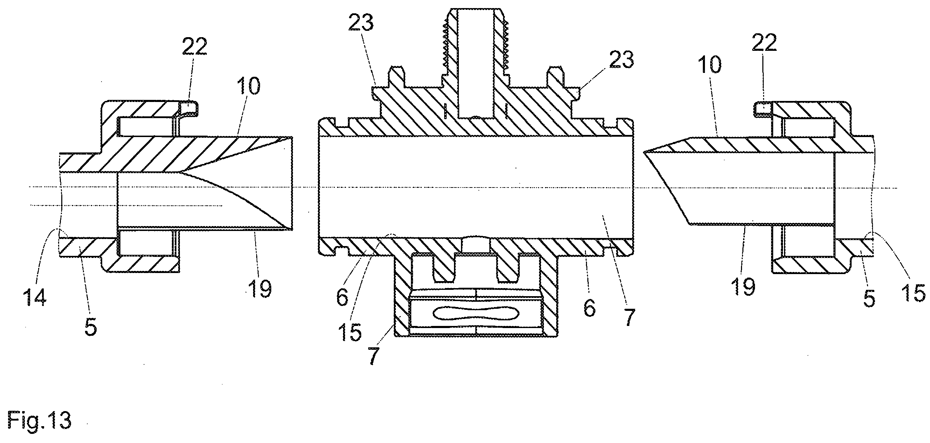

In den Ausführungsbeispielen gemäß den Fig. 11 - 13 sind andersartige Verdrehsicherungselemente vorgesehen. Diese Verdrehsicherungselemente sind jeweils als an den Leitungstücken 5 und den Abzweigstücken 7 angeordnete und formschlüssig ineinander fassende Formelemente 22, 23 ausgebildet. Hierbei sind die Formelemente als Aussparungen 22 und die Aussparungen 22 fassende Gegenelemente 23 ausgebildet.

## Patentansprüche

1. Ausbringleitung für eine landwirtschaftliche Feldspritze mit in gleichmäßigen Abständen angeordneten Abzeigleitungen aufweisenden Abzeigstücken (7), an denen Ausbringelemente angeordnet sind, wobei die Ausbringleitung (5) zumindest mit einer Flüssigkeitszuführleitung verbinder ist, wobei die Abzweigstücke (7) über Verbindungselemente (8) mit der Ausbringleitung (5) verbunden ist, wobei der Flüssigkeitsquerschnitt der Ausbringleitung (5) in Richtung der der Flüssigkeitsleitung abgewandten Seite kontinuierlich und/oder stufenweise abnimmt, **dadurch gekennzeichnet, dass** der Querschnitt der Durchgangsleitung (13) der Abzweigstücke (7) zumindest teilweise größer ist als der Querschnitt der Ausbringleitungen (5) zwischen den Abzweigstücken (7), dass die Mittelpunkte (16, 17) der Flüssigkeitsquerschnitte der Ausbringleitungen (5) und der Kupplungsstücke (10) der Ausbringleitungen (5) mit den Abzweigleitungen (6) versetzt zueinander angeordnet sind und zwar derart, dass die untere Leitungsfläche (14) der Ausbringleitung (5) auf gleicher Höhe wie die untere Leitungsfläche (15) der Abzweigleitung (6) liegen.

2. Ausbringleitung nach Anspruch 1, **dadurch gekennzeichnet, dass** die Wandung (18) des Kupplungsstückes (10) der Ausbringleitung (5) im unteren Bereich einen schlitzartigen Ausschnitt (19) aufweist.

3. Ausbringleitung nach Anspruch 1, wobei die Ausbringleitung an einem Auslegergestänge einer landwirtschaftlichen Feldspritze angeordnet ist und aus vorzugsweise mehreren über als Steckverbindung ausgebildeten Kupplungselementen miteinander verbundenen Leitungsstücken und vorzugsweise als Abzweigstücke ausgebildeten Kupplungsstücke besteht, wobei die Steckverbindungen zwischen den Leitungsstücken (9) und Kupplungsstücken (7) formschlüssige Sicherungselemente aufweisen, wobei die Kupplungsstücken aus Steckhülsen (9, 10) und Steckern (9) bestehen, **dadurch gekennzeichnet**, das zwischen den Leitungsstücken (5) und Abzweigstücken (7) jeweils Verdrehsicherungselemente (22, 23) angeordnet sind.

4. Ausbringleitung nach Anspruch 3, **dadurch gekennzeichnet, dass** in den Steckhülsen (6) Durchbrüche (20) und in den Steckern (9) Aussparungen (21), die in Kupplungsposition miteinander fluchten und in die zumindest ein Sicherungsstecker steckbar ist, angeordnet sind, dass die Aussparungen (21) in dem Stecker (9) als zwei parallel zueinander und geradlinig verlaufende nutartige Vertiefungen ausgebildet sind, dass die nutartigen Vertiefungen (21) in den gegenüberliegenden Außenwänden des Steckers (9) angebracht sind.

5. Ausbringleitung nach Anspruch 3, **dadurch gekennzeichnet, dass** die Verdrehsicherungselemente als jeweils an den Leitungsstücken und den Abzweigstücken angeordnete und formschlüssig ineinanderfassende Formelemente ausgebildet sind.

6. Ausbringleitung nach Anspruch 3, **dadurch gekennzeichnet, dass** die vom Formelemente als Aussparung (22) und in die Aussparung (22) fassendes Gegenelemente (23) ausgebildet sind.

## Claims

1. Distribution pipe for an agricultural field spraying device with branch pieces (7) which have branch pipes arranged at uniform distances and on which distribution elements are arranged, wherein the distribution pipe (5) is connectable at least to a liquid supply pipe, wherein the branch pieces (7) are connected to the distribution pipe (5) via connecting elements (8), wherein the liquid cross section of the distribution pipe (5) decreases continuously and/or in a stepwise manner in the direction of the side facing away from the liquid pipe, **characterized in that** the cross section of the passage pipe (13) of the branch pieces (7) is at least partially larger than the cross section of the distribution pipes (5) between the branch pieces (7), **in that** the centre points (16, 17) of the liquid cross sections of the distribution pipes (5) and the coupling pieces (10) of the distribution pipes (5) to the branch pipes (6) are arranged offset with respect to one another, specifically in such a manner that the lower pipe surface (14) of the distribution pipe (5) lies at the same height as the lower pipe surface (15) of the branch pipe (6).

2. Distribution pipe according to Claim 1, **characterized in that** the wall (18) of the coupling piece (10) of the distribution pipe (5) has a slot-like cutout (19) in the lower region.

3. Distribution pipe according to Claim 1, wherein the distribution pipe is arranged on a boom linkage of an agricultural field spraying device and consists of preferably a plurality of pipe pieces, which are connected to one another via coupling elements designed as a plug-in connection, and of coupling pieces, which are preferably designed as branch pieces, wherein the plug-in connections between the pipe pieces (9) and coupling pieces (7) have interlocking securing elements, wherein the coupling pieces consist of plug-in sleeves (9, 10) and plugs (9), **characterized in that** anti-twist elements (22, 23) are arranged in each case between the pipe pieces (5) and branch pieces (7).

4. Distribution pipe according to Claim 3, **characterized in that** apertures (20) are arranged in the plug-in sleeves (6) and recesses (21) are arranged in the plugs (9), which apertures and recesses are aligned with one another in the coupling position and into which at least one securing plug can be plugged, **in that** the recesses (21) in the plug (9) are designed as two groove-like depressions running parallel to each other and rectilinearly, **in that** the groove-like depressions (21) are provided in the opposite outer walls of the plug (9).

5. Distribution pipe according to Claim 3, **characterized in that** the anti-twist elements are designed as shaped elements which are in each case arranged on the pipe pieces and the branch pieces and grip into one another in an interlocking manner.

6. Distribution pipe according to Claim 3, **characterized in that** the of the shaped elements are designed as a recess (22) and mating elements (23) gripping into the recess (22).

## Revendications

1. Conduite de distribution pour un pulvérisateur agricole comprenant des tronçons de dérivation (7) présentant des conduites de dérivation disposées à intervalles réguliers, au niveau desquelles tronçons de dérivation sont disposés des éléments de distribution, la conduite de distribution (5) pouvant être connectée au moins à une conduite d'alimentation en liquide, les tronçons de dérivation (7) étant connectés par le biais d'éléments de connexion (8) à la conduite de distribution (5), la section transversale de liquide de la conduite de distribution (5) diminuant en continu et/ou de manière étagée dans la direction du côté opposé à la conduite de liquide, **caractérisée en ce que** la section transversale de la conduite de passage (13) du tronçon de dérivation (7) est au moins en partie supérieure à la section transversale des conduites de distribution (5) entre les tronçons de dérivation (7), **en ce que** les centres (16, 17) des sections transversales de liquide des conduites de distribution (5) et des tronçons d'accouplement (10) des conduites de distribution (5) aux conduites de dérivation (6) sont décalés les uns par rapport aux autres et ce de telle sorte que la surface de conduite inférieure (14) de la conduite de distribution (5) soit située à la même hauteur que la surface de conduite inférieure (15) de la conduite de dérivation (6).

2. Conduite de distribution selon la revendication 1, **caractérisée en ce que** la paroi (18) du tronçon d'accouplement (10) de la conduite de distribution (5) présente, dans la région inférieure, une découpe en forme de fente (19).

3. Conduite de distribution selon la revendication 1, dans laquelle la conduite de distribution est disposée au niveau d'une tringlerie de bras de potence d'un pulvérisateur agricole et se compose de préférence de plusieurs tronçons de conduite connectés les uns aux autres par le biais d'éléments d'accouplement réalisés sous forme de connexion enfichable et de préférence sous forme de tronçons d'accouplement réalisés sous forme de tronçons de dérivation, les connexions enfichables entre les tronçons de conduite (9) et les tronçons d'accouplement (7) présentant des éléments de fixation par engagement par correspondance de formes, les tronçons d'accouplement se composant de douilles d'enfichage (9, 10) et de connecteurs enfichables (9), **caractérisée en ce que** des éléments antirotation (22, 23) sont à chaque fois disposés entre les tronçons de conduite (5) et les tronçons de dérivation (7).

4. Conduite de distribution selon la revendication 3, **caractérisée en ce que** des orifices (20) sont réalisés dans les douilles d'enfichage (6) et des évidements (21) sont réalisés dans les connecteurs enfichables (9), lesquels sont en affleurement les uns avec les autres dans la position d'accouplement, et dans lesquels au moins un connecteur enfichable de sécurité peut être enfiché, **en ce que** les évidements (21) dans le connecteur enfichable (9) sont réalisés sous forme de deux renfoncements de type rainure s'étendant parallèlement l'un à l'autre et en ligne droite, **en ce que** les renfoncements de type rainure (21) sont réalisés dans les parois extérieures opposées du connecteur enfichable (9).

5. Conduite de distribution selon la revendication 3, **caractérisée en ce que** les éléments antirotation sont réalisés sous forme d'éléments façonnés disposés à chaque fois au niveau des tronçons de conduite et des tronçons de dérivation et s'engageant par correspondance de formes les uns dans les autres.

6. Conduite de distribution selon la revendication 3, **caractérisée en ce que** les par les éléments façonnés sont réalisés sous forme d'évidement (22) et d'éléments conjugués (23) entourant l'évidement (22).
